(19) Europäisches Patentamt / European Patent Office / Office européen des brevets

(11) **EP 2 999 353 B1**

(12) **EUROPEAN PATENT SPECIFICATION**

(45) Date of publication and mention
of the grant of the patent:
**21.03.2018  Bulletin 2018/12**

(21) Application number: **14723810.9**

(22) Date of filing: **14.05.2014**

(51) Int Cl.:
*A23P 20/20* (2016.01)        *A23P 30/40* (2016.01)
*A23L 9/10* (2016.01)        *A23L 29/256* (2016.01)
*A23L 29/281* (2016.01)

(86) International application number:
**PCT/EP2014/059849**

(87) International publication number:
**WO 2014/184245 (20.11.2014 Gazette 2014/47)**

(54) **STABLE AERATED FOOD PRODUCT AND PROCESS FOR PREPARING SAME**

STABILES AUFGESCHLAGENES LEBENSMITTELPRODUKT UND DESSEN
HERSTELLUNGSVERFAHREN

PRODUIT ALIMENTAIRE AÉRÉ STABLE ET SON PROCESSUS DE PRÉPARATION

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **14.05.2013  EP 13167724**

(43) Date of publication of application:
**30.03.2016  Bulletin 2016/13**

(73) Proprietor: **Nestec S.A.**
**1800 Vevey (CH)**

(72) Inventors:
• **MARCOUT, Anne**
**F-14100 Hermival Les Vaux (FR)**
• **CHETIOUI, Aurore Celine**
**F-27000 Evreux (FR)**
• **DENIS, Claire**
**F-14000 Caen (FR)**

(74) Representative: **Cogniat, Eric Jean Marie**
**Nestec S.A.**
**Centre de Recherche Nestlé**
**Vers-chez-les-Blanc**
**Case Postale 44**
**1000 Lausanne 26 (CH)**

(56) References cited:
EP-A1- 2 198 722        WO-A1-95/29595
WO-A1-2011/069979        WO-A1-2013/083697
WO-A2-2012/112700        US-A- 4 869 917

• DATABASE GNPD [Online] MINTEL; March 2013 (2013-03), anonymous: "Chocolate & Banana Eggs", XP002726111, Database accession no. 2033502
• FOLEGATTI M I S ET AL: "Development and stability evaluation of passion fruit mousse", 2002 ANNUAL MEETING AND FOOD EXPO - ANAHEIM, CALIFORNIA, INSTITUTE OF FOOD TECHNOLOGISTS, USA, 1 January 2002 (2002-01-01), page 1, XP008134969,
• Hatsue Moritaka: "RHEOLOGICAL PROPERTIES OF AQUEOUS AGAROSE-GELATIN GELS", Journal of Texture Studies, 3 July 1980 (1980-07-03), pages 257-270, XP055077808, Retrieved from the Internet: URL:http://onlinelibrary.wiley.com/doi/10. 1111/j.1745-4603.1980.tb00325.x/pdf [retrieved on 2013-09-05]
• Warase: "Rheological properties of agarose-gelatin gels", Rheol. Acta, 1 January 1980 (1980-01-01), pages 220-225, XP055077976, Retrieved from the Internet: URL:http://rd.springer.com/content/pdf/10. 1007/BF01521934.pdf [retrieved on 2013-09-06]
• Clark: "Structural and Mechanical Properties of Agar/Gelatin Co-gels. Small-Deformation Studies", Macromolecules, 1 January 1983 (1983-01-01), pages 1367-1374, XP055077977, Retrieved from the Internet: URL:http://pubs.acs.org/doi/pdf/10.1021/ma 00242a019 [retrieved on 2013-09-06]

**Description**

**Technical Field**

The present invention relates to a process for preparing a stable aerated food product containing a stabilizing system consisting of a mixture of gelatin and agar-agar.

The invention also relates to a stable aerated food product, which has a low fat and/or a low solid and/or a low calorie content(s) and which is devoid of emulsifiers.

**Background of the Invention**

Aerated food products, commonly known as "mousses", based on dairy products (i.e milk food products) in the form of a foam obtained by whipping air or gas into a dairy base, are well known in the art.

Neutral mousses having a high fat content, high milk content, high solid content and overrun from 100 to 130%, which require the presence of stabilizing hydrocolloids such as carrageenan and/or gelatin and/or alginate and/or starch are currently available on the market. Apart from their high production costs and sensitivity to contamination due to neutral pH, these products are perceived by consumers as indulgent and non-healthy products, and thus not suitable for everyday consumption.

Acidic fermented mousses which have a pH between 3.5 and 4.5, also have a high milk content and usually contain 0-4% fat content and around 30% solid content. They can achieve overruns of about 100-130% and usually contain stabilizers such as gelatin and pectin. Apart from the high calorie content and the need for an acidification step, the presence of pectin in the composition in order to protect milk proteins increases the cost and the complexity of the preparation process.

A drinkable gas-containing product having a flowing gel texture comprising a gelling agent (pectin) is disclosed in WO2011/069979.

EP2198722 discloses a whipped gelatin dessert including water, sweetener, 2% or less fat and about 0.75 to 2% gelling hydrocolloid (gelatin) This product is obtained by preparing a mixture of water, fat and gelling hydrocolloid, cooling the mixture to obtain a gel, and whipping the gelled mixture at high shear, thus achieving an overrun of 25-100% which is refrigerator-stable for at least about 3 months. EP2198722 recommends not to use any stabilizers/thickening agents such as agar except in "insignificant amounts" (preferably lower than 0.05%).

WO 2012/112700 discloses a dehydrated and aerated food product including a plant puree mixture and a hydrocolloid.

The articles of H. Moritaka et al., J. Texture Studies, 1980, 11, 257-270 ; M. Watase et al., Rheol. Acta, 1980, 220-225 ; and A. H Clarck et al., Macromolecules, 1983, 16, 1367-1374 relate to the structural, rheological, and mechanical properties of reticulated agarose gels containing various amounts of gelatin. These articles do not teach or suggest the use of a stabilizer system consisting of gelatin and agar-agar in an aerated food product.

It is an object of the invention to provide a simple and economical process for preparing a stable aerated food product which is devoid of emulsifiers.

It is a further object of the invention to provide an aerated food product which is free of emulsifiers, having a low fat and/or a low solid and/or a low calorie content(s), and which is stable not only when refrigerated, but also at ambient temperature.

**Summary of the Invention**

In a first aspect of the invention, there is provided a process for preparing a stable aerated food product free of emulsifiers other than the gelatin of the stabilizer system, and wherein the fat content is 0 to 1wt% with respect to the total weight of the aerated food product, comprising the steps of:

- preparing a starting mixture containing a liquid base and a stabilizer system consisting of a mixture of gelatin and agar-agar at a first temperature equal to or higher than the dissolution temperature of said mixture of gelatin and agar-agar, said temperature being from 80°C to 100°C,
- cooling the mixture thus obtained to a second temperature equal to or lower than the gel temperature of said mixture of gelatin and agar-agar, in order to obtain a gelled mixture, said temperature being below 20°C,
- submitting said gelled mixture to an agitation step to break the gel without returning the gel to the liquid state, before whipping it, wherein the agitation step is carried out at a temperature below 20°C, and
- whipping said agitated mixture in order to obtain a mousse having an overrun of 10 to 200%.

The starting mixture is free of emulsifiers other than the gelatin of the stabilizer system.

In a second aspect of the invention, there is provided a shelf stable aerated food product as in claim 7, comprising a liquid food base and a stabilizer system consisting of a mixture of gelatin and agar-agar, where said shelf stable aerated food product is devoid of emulsifiers, and has preferably an overrun of 10 to 200%, preferably 25 to 100%. This overrun can be advantageously maintained for at least 2 months at ambient temperature.

The invention further relates to a composite dessert comprising at least one layer of aerated food product.

## Detailed Description

The inventors have found that, contrary to a process where a liquid mixture containing a hydrocolloid stabilizing system is whipped to obtain a mousse, and cooled to obtain the desired gelling effect of the stabilizing system, it was possible to provide an aerated product with high stability, not only when refrigerated but also at ambient temperature (15-20°C), by forming the mousse from an already gelled mixture, which is submitted to an agitation step to obtain a composition where the gel state is modified while not returning to the liquid state, before the whipping step.

Without wishing to be bound by theory, the inventors made the hypothesis according to which the agitation of the gelled mixture results into breaking the gel, which provides a composition having a different texture than the one obtained after gelling, though not returning to a liquid state, which, upon whipping, is able to homogeneously trap the gas bubbles, in particular the air bubbles, into the mousse.

The inventors also found that this effect could not be achieved by using gelatin alone. Actually, when gelatin is used as stabilizer, the stabilizing effect is not achieved: in such case, the mousse does not have a clean-cut aspect, it is very soft especially at 15-20°C where the gelatin gives a softer gel (unlike agar-agar) and the mousse collapses shortly after manufacturing. In addition, it can be seen that the bubbles are large and irregular.

Unexpectedly, the desired stabilization could be achieved by using a specific combination of gelatin and agar-agar. In the present application, "combination of gelatin and agar-agar" or "mixture of gelatin and agar-agar" are equally used. Gelatin as understood herein is a type A or a type B gelatin. Agar-agar is a gelling product obtained from red algae of the Gelidiaceae and Gracilariaceae families, having the CAS number 9002-18-0.

The starting mixture is free of emulsifiers other than the gelatin of the stabilizer system. Preferably, the starting mixture is free of any artificial or non-natural emulsifier. Examples of artificial and non-natural emulsifier which are avoided include: mono- and diglyceride of fatty acids, acid esters of mono- and diglycerides of fatty acids such as acetic, lactic, citric, tartaric, mono- and diacetyl tartaric acid esters of mono- and diglycerides of fatty acids, mixed acetic and tartaric acid esters of mono- and diglycerides of fatty acid, sucrose esters of fatty acids, polyglycerol esters if fatty acids, polyglycerol polyricinoleate, polyethylene sorbitan mono-oleate, polysorbate 80 and, chemically extracted lecithins.

The starting mixture comprises the liquid base and optional additives, which may be added to the liquid base.

The liquid base can comprise any liquid food product, in particular water and/or fruit juice, fruit puree, coffee, tea or herb tea, fermented dairy drink, or else animal or vegetable broth.

Preferably, the liquid base comprises 75 to 95% water.

The liquid base may also contain usual ingredients of dessert compositions such as carbohydrates, in particular sucrose, fructose and their mixtures; vegetal ingredients, such as cocoa, a fat source such as vegetable fat (for instance, cocoa butter, coconut oil, sunflower oil, rapeseed oil etc.), natural colouring agents; natural or artificial flavouring agents; sweeteners, in particular artificial sweeteners such as acesulfame K, aspartame, sodium cyclamate, sucralose, stevia, neohesperidine and their mixtures, etc.

Preferably, the stabilizer system according to the invention, consisting of a mixture of gelatin and agar-agar, amounts to approximately 0.6 to 2.5wt% with respect to the total weight of the starting mixture (liquid base and optional additives). Preferably, the amount of agar-agar does not exceed 30% of that of gelatin in the stabilizer system. Notably, the amount of gelatin is 0.5 to 2wt%, preferably 0.8 to 1.5wt%, and the amount of agar-agar is 0.1 to 0.5wt%, preferably 0.15 to 0.30wt%, with respect to the total weight of the starting mixture (liquid base and optional additives).

Preferably, the fat content is 0 to 1wt% with respect to the total weight of the aerated food product (mousse). According to the process of the invention, all ingredients of the liquid base are preferably mixed and heated prior to adding the stabilizing system consisting of a mixture of gelatin and agar-agar, while maintaining the mixture at a temperature which is equal to or above the dissolution temperature of the mixture of gelatin and agar-agar. This first temperature is from 80°C to 100°C, more preferably 80°C to 90°C. "Dissolution temperature" is understood as the temperature at which the mixture of gelatin and agar-agar can be homogenized in the liquid base without remaining in a dispersed state.

After mixing, the mixture is cooled to a second temperature which is equal to or below the gel temperature of gelatin and agar-agar, in order to obtain a clean-cut gel texture. This second temperature is below 20°C, preferably below 15°C, more preferably from 4 to 10°C, and is maintained during the agitation step.

According to a preferred embodiment, the gelled mixture, before agitation, has a gel strength as measured by penetrometry of 50 to 150g, preferably 80 to 120 g.

Gel strength can be measured, for instance, by a measuring device usual in the field, such as a TAXT2 texture analyzer, using a cylinder probe 25 mm diameter. The gel strength corresponds to the maximum force measured after penetration of the probe at a distance of 10 mm and at a speed of 0.5 mm/s.

The gelled mixture is then submitted to an agitation step at a temperature below 20°C, preferably below 15°C, more preferably from 4 to 10°C.

The agitation step can be carried out by using any device commonly used in the field, or even manually, for instance in a mixer.

For example, agitation can be performed in a container having a mechanical agitation system, such as an agitation system comprising Z-shape blades, commonly known as "Z-Type tank". In such case, the agitation step may be carried out at a speed between 10 to 20 rpm, preferably between 14 to 18 rpm, during 15 to 25 min, preferably 18 to 22 min, to break the gel. Agitation may be continued at a speed between 8 to 15 rpm, preferably between 10 to 12 rpm, during 5 to 15 min, preferably 8 to 12 min, to smoothen the gel before whipping it.

The agitation step is carried out in order to obtain a composition having a different texture than that of the gelled mixture, though not being liquid, and preferably has a "puree" consistency.

According to the invention, the agitation step results in obtaining a composition which is not liquid and which retains a viscosity of the order of, for instance, 30000 to 80000 mPa.s.

Preferably, the obtained composition, after agitation, has a viscosity of 45000 to 65000 mPa.s.

Viscosity can be measured, for example, with a Brookfield viscosimeter, at a temperature of 8°C, a rotation speed of 5 rpm and a cross-shaped probe reference T bar 93.

Whipping of this composition is then carried out at temperature of, preferably, below 20°C, preferably below 15°C, more preferably from 4 to 10°C. Whipping can be carried out by using, for instance, a whipping device commonly used in the field, for instance a Mondomix Aeromix device (Haas Mondomix B.V), or any device commonly used in the field, so that an overrun of 10 to 200%, preferably 25 to 100% is obtained.

"Overrun" refers to the increase in volume of the aerated shelf stable food product and also is referred to as a foaming capacity. It is measured according to the following formula:

$$\frac{(volume\ of\ the\ food\ product\ after\ aeration - volume\ of\ the\ food\ product\ before\ aeration)}{volume\ of\ the\ food\ product\ before\ aeration}$$

Overrun is expressed as a percentage value.

"Aerated" (or "whipped") refers to the incorporation of a gas into a food material. For purposes herein, the gas is not particularly limited, and may be air, nitrogen, carbon dioxide, and gas combinations thereof.

After whipping, the aerated product according to the invention is filled in a container, such as a plastic container, cooled and stored under refrigeration (4°C to 10°C). Alternatively, storage can be carried out at ambient temperature (15°C to 20°C) without resulting into the collapsing of the mousse.

The invention further relates to a stable aerated food product comprising a mousse obtained from a liquid base and a hydrocolloid-based stabilizer system consisting of gelatin and agar-agar, as described above, obtainable by the process described above.

Said food product is free of emulsifiers other than the gelatin of the stabilizer system, as mentioned above.

Preferably, the stable aerated food product has an overrun of 10% to 200% which can be maintained for at least 2 months at ambient temperature, and, advantageously, up to 6 months when chilled.

According to a preferred embodiment, the fat content is below or equal to 1wt% of the final product.

In a preferred aspect, the aerated food product according to the invention has a low calorie content, for example between 30 and 60 kcal /100g of the final product.

The aerated food product according to the invention may also have a low solid content of approximately 10 to 20wt%.

The pH of the aerated food product according to the invention is preferably of 3.1 to 4.5. If necessary, the pH is adjusted by addition of an acid, for instance citric acid.

According to another aspect, the invention further relates to a composite food product, in particular a composite dessert, comprising at least one layer of aerated food (multi-layer food product).

For instance, the composite food product may comprise at least one additional layer which may be selected from the group consisting of dairy-based composition, for instance chilled dairy compositions such as yogurt or fromage frais, or a fruit puree, or else on top of a liquid component, such as for example a beverage, a smoothie, or a drinking yoghurt.

In such case, the aerated food product as described above is dosed as intermediate layer or on the top of one or more additional layers dosed before in the container to form the intermediate or superior phase of the composite food-product.

Alternatively, several aerated food products having different compositions, solid contents, textures and/or flavours may be dosed successively in the container.

The aerated food product according to the invention advantageously provides new textures, taste sensations and appealing appearances to consumers, while being well suited to everyday consumption due to the low fat and/or low calorie content.

As used in this specification, the words "comprises", "comprising", and similar words, are not to be interpreted in an exclusive or exhaustive sense. In other words, they are intended to mean "including", but not limited to.

Any reference to prior art documents in this specification is not to be considered an admission that such prior art is widely known or forms part of the common general knowledge in the field.

The invention is further described with reference to the following examples. It will be appreciated that the invention as claimed is not intended to be limited in any way by these examples.

Example 1: Passion mousse

The passion mousse has the composition shown in table 1:

Table 1

| Ingredient | Wt% |
|---|---|
| Passion juice | 10.00 |
| Water | 80.80 |
| White sugar | 8.00 |
| Agar-agar | 0.20 |
| Gelatin | 1.00 |

The aerated food product was prepared as follows: all ingredients except gelatin and agar-agar were mixed and the mixture was heated at 90°C for 3 min. Gelatin and agar-agar were then added and mixing was performed for an additional 5 min.

The mixture was cooled to 4°C in a tank to obtain a clean-cut gel texture, then manually mixed with a manual agitator.

The gelled mixture of passion, before agitation, has a gel strength of around 90g and the obtained composition, after agitation, has a viscosity of around 58 000 mPas.

Whipping was carried out with a usual whipping device (Mondomix Aeromix) to an overrun of 30%, using nitrogen for the gas.

The aerated product thus obtained was filled in a container and cooled to 6°C.

Visually, the aerated product shows a homogeneous texture containing small and homogeneous air bubbles.

The aerated product of example 1 has an improved stability i.e it retains an overrun of 30% for 6 months at 4-8°C and 60 days at 15°C.

Example 2: Pineapple mousse

The pineapple mousse has the composition shown in table 2:

Table 2

| Ingredient | Wt% |
|---|---|
| Pineapple juice | 98.20 |
| Agar-agar | 0.20 |
| Gelatin | 1.00 |
| Citric acid anhydrous | 0.60 |

The same preparation process as in example 1 was used.

The gelled mixture of pineapple, before agitation, has a gel strength of around 120g and the obtained composition, after agitation, has a viscosity of around 52 000 mPas.

The aerated product of example 2 has an improved stability, i.e it retains an overrun of 180% for 6 months at 4-8°C and 60 days at 15°C.

Example 3: composite dessert

A 3-layered composite dessert was prepared, using the passion mousse of example 1 as upper layer (1st layer). The amount of passion mousse in the composite dessert was 35wt% of the final dessert.

The intermediate layer in-between (2nd layer) was an orange-passion cream (55wt% of the final dessert) having the composition shown in table 3:

Table 3

| Ingredient | Wt% |
| --- | --- |
| Skimmed milk | 82.10 |
| Cream | 1.00 |
| White sugar | 5.00 |
| Orange preparation | 5.00 |
| Passion juice | 3.00 |
| Maize starch | 2.70 |
| Hydrocolloids | 0.60 |
| Citric acid | 0.60 |

The bottom layer (3rd layer) was an orange puree (10wt% of the final dessert) having the composition shown in table 4.

Table 4

| Ingredient | Wt% |
| --- | --- |
| Water | 37.85 |
| Guar | 0.40 |
| White sugar | 1.99 |
| Orange preparation | 59.76 |

The bottom (3rd) layer was dosed first in the container, then the intermediate (2nd) layer and finally the top (1st) layer.

Although the invention has been described by way of example, it should be appreciated that variations and modifications may be made without departing from the scope of the invention as defined in the claims. Furthermore, where known equivalents exist to specific features, such equivalents are incorporated as if specifically referred in this specification.

**Claims**

1. A process for preparing a stable aerated food product free of emulsifiers other than the gelatin of the stabilizer system, and wherein the fat content is 0 to 1wt% with respect to the total weight of the aerated food product, comprising the steps of:

   - preparing a starting mixture containing a liquid base and a stabilizer system consisting of a mixture of gelatin and agar-agar at a first temperature higher than the dissolution temperature of said mixture of gelatin and agar-agar, said temperature being from 80°C to 100°C,
   - cooling the mixture thus obtained to a second temperature equal to or lower than the gel temperature of the mixture of gelatin and agar-agar, said temperature being below 20°C, in order to obtain a gelled mixture,

**EP 2 999 353 B1**

- submitting said gelled mixture to an agitation step to break the gel without returning the gel to the liquid state, before whipping it, wherein the agitation step is carried out at a temperature below 20°C, and
- whipping said agitated mixture in order to obtain a mousse having an overrun of 10 to 200%.

**2.** The process according to claim 1, wherein the stabilizer system, consisting of a mixture of gelatin and agar-agar, amounts to 0.6 to 2.5wt% with respect to the total weight of the starting mixture.

**3.** The process according to claim 1 or 2, wherein the stabilizer system consisting of a mixture of gelatin and agar-agar contains 0.5 to 2wt% of gelatin and 0.1 to 0.5wt% of agar-agar with respect to the total weight of the starting mixture.

**4.** The process according to any one of claims 1 to 3, wherein the liquid base comprises water and/or fruit juice, fruit puree, coffee, tea or herb tea, fermented milk drink, animal broth or vegetable broth, and, optionally, additives selected from carbohydrates, vegetal ingredients, a fat source, flavouring agents and sweeteners.

**5.** The process according to any one of claims 1 to 4, wherein the liquid base contains 75 to 95% water.

**6.** The process according to any one of claims 1 to 5, wherein the composition obtained after agitation has a viscosity of 30000 to 80000 mPa.s.

**7.** A stable aerated food product free of emulsifiers other than the gelatin of the stabilizer system, and wherein the fat content is 0 to 1wt% with respect to the total weight of the aerated food product, comprising a mousse obtained from a liquid base and a hydrocolloid-based stabilizer system consisting of a mixture of gelatin and agar-agar, obtainable by the process according to claims 1 to 6.

**8.** A stable aerated food product according to claim 7, wherein the overrun of 10% to 200% is maintained for at least 2 months at ambient temperature.

**9.** A stable aerated food product according to claim 7 or 8, wherein the calorie content is between 30 and 60 kcal /100g.

**10.** A composite food product comprising at least one layer of aerated food product according to any one of claims 7 to 9.

**11.** A composite food product according to claim 10, comprising at least one additional layer which is selected from the group consisting of dairy-based composition, a fruit puree or a liquid.

**Patentansprüche**

**1.** Verfahren zum Herstellen eines stabilen, mit Luft durchsetzten Lebensmittelprodukts, das mit Ausnahme der Gelatine des Stabilisatorsystems frei von Emulgatoren ist, wobei der Fettgehalt 0 bis 1 Gew.-% bezogen auf das Gesamtgewicht des mit Luft durchsetzten Lebensmittelprodukts beträgt, das folgende Schritte umfasst:

- das Herstellen einer Ausgangsmischung, die eine flüssige Basis und ein Stabilisatorsystem umfasst, das aus einer Mischung aus Gelatine und Agar-Agar besteht, bei einer ersten Temperatur, die höher ist als die Auflösungstemperatur der Mischung aus Gelatine und Agar-Agar, wobei die Temperatur von 80 °C bis 100 °C beträgt,
- das Abkühlen der so erhaltenen Mischung auf eine zweite Temperatur, die gleich der oder niedriger als die Gelierungstemperatur der Mischung aus Gelatine und Agar-Agar ist, wobei die Temperatur unter 20 °C liegt, um eine gelierte Mischung zu erhalten,
- das Unterziehen der gelierten Mischung einem Rührvorgang, um das Gel aufzubrechen, ohne das Gel wieder in seine flüssigen Zustand zu versetzen, ehe es geschlagen wird, wobei der Rührvorgang bei einer Temperatur von unter 20 °C erfolgt, und
- das Schlagen der gerührten Mischung, um eine Schaumspeise mit einem Lufteinschlag von 10 bis 200 % zu erhalten.

**2.** Verfahren nach Anspruch 1, wobei das Stabilisatorsystem, das aus einer Mischung aus Gelatine und Agar-Agar besteht, in einer Menge von 0,6 bis 2,5 Gew.-%, bezogen auf das Gesamtgewicht der Ausgangsmischung, vorliegt.

**3.** Verfahren nach Anspruch 1 oder 2, wobei das Stabilisatorsystem, das aus einer Mischung aus Gelatine und Agar-Agar besteht, von 0,5 bis 2 Gew.-% Gelatine und 0,1 bis 0,5 Gew.-% Agar-Agar, bezogen auf das Gesamtgewicht der Ausgangsmischung, enthält.

4. Verfahren nach einem der Ansprüche 1 bis 3, wobei die flüssige Basis Wasser und/oder Fruchtsaft, Fruchtpüree, Kaffee, Tee oder Kräutertee, fermentiertes Milchgetränk, Brühe tierischen Ursprungs oder Gemüsebrühe und wahlweise Zusatzstoffe, ausgewählt aus Kohlenhydraten, pflanzlichen Inhaltsstoffen, einer Fettquelle, Aromastoffen und Süßstoffen umfasst.

5. Verfahren nach einem der Ansprüche 1 bis 4, wobei die flüssige Basis 75 bis 95 % Wasser enthält.

6. Verfahren nach einem der Ansprüche 1 bis 5, wobei die nach dem Rühren erhaltene Zusammensetzung eine Viskosität von 30000 bis 80000 mPa.s aufweist.

7. Stabiles, mit Luft durchsetztes Lebensmittelprodukt, das mit Ausnahme der Gelatine des Stabilisatorsystems frei von Emulgatoren ist, wobei der Fettgehalt 0 bis 1 Gew.-%, bezogen auf das Gesamtgewicht des mit Luft durchsetzten Lebensmittelprodukts, beträgt, das eine Schaumspeise umfasst, die von einer flüssigen Basis und einem hydrokolloidbasierten Stabilisatorsystem, bestehend aus einer Mischung aus Gelatine und Agar-Agar, erhalten wird und durch das Verfahren nach den Ansprüchen 1 bis 6 erhalten werden kann.

8. Stabiles, mit Luft durchsetztes Lebensmittelprodukt nach Anspruch 7, wobei der Lufteinschlag von 10 % bis 200 % mindestens 2 Monate lang bei Umgebungstemperatur beibehalten wird.

9. Stabiles, mit Luft durchsetztes Lebensmittelprodukt nach Anspruch 7 oder 8, wobei der Kaloriengehalt zwischen 30 bis 60 kcal/100 g beträgt.

10. Zusammengesetztes Lebensmittelprodukt, das mindestens eine Schicht des mit Luft durchsetzten Lebensmittelprodukts nach einem der Ansprüche 7 bis 9 umfasst.

11. Zusammengesetztes Lebensmittelprodukt nach Anspruch 10, das mindestens eine weitere Schicht umfasst, die aus einer milchproduktbasierten Zusammensetzung, einem Fruchtpüree oder einer Flüssigkeit besteht.

## Revendications

1. Procédé de préparation d'un produit alimentaire aéré stable exempt d'émulsifiants autres que la gélatine du système de stabilisation et dans lequel la teneur en matières grasses va de 0 à 1 % en poids par rapport au poids total du produit alimentaire aéré, comprenant les étapes de:

- préparer un mélange de départ contenant une base liquide et un système de stabilisation consistant en un mélange de gélatine et d'agar-agar à une première température supérieure à la température de dissolution dudit mélange de gélatine et d'agar-agar, ladite température allant de 80 °C à 100 °C,
- refroidir le mélange ainsi obtenu à une deuxième température égale ou inférieure à la température de gélification du mélange de gélatine et d'agar-agar, ladite température étant en dessous de 20 °C, afin d'obtenir un mélange gélifié,
- soumettre ledit mélange gélifié à une étape d'agitation pour rompre le gel sans ramener le gel à l'état liquide, avant de le fouetter, dans lequel l'étape d'agitation est effectuée à une température en dessous de 20 °C, et
- fouetter ledit mélange agité afin d'obtenir une mousse ayant un taux de foisonnement de 10 à 200 %.

2. Procédé selon la revendication 1, dans lequel le système de stabilisation, consistant en un mélange de gélatine et d'agar-agar, s'élève de 0,6 à 2,5 % en poids par rapport au poids total du mélange de départ.

3. Procédé selon la revendication 1 ou 2, dans lequel le système de stabilisation consistant en un mélange de gélatine et d'agar-agar contient 0,5 à 2 % en poids de gélatine et 0,1 à 0,5 % en poids d'agar-agar par rapport au poids total du mélange de départ.

4. Procédé selon l'une quelconque des revendications 1 à 3, dans lequel la base liquide comprend de l'eau et/ou du jus de fruits, de la purée de fruits, du café, du thé ou de la tisane, une boisson au lait fermenté, du bouillon d'origine animale ou bouillon de légumes et, optionnellement, des additifs choisis parmi des glucides, des ingrédients végétaux, une source de matières grasses, des agents aromatisants et des édulcorants.

5. Procédé selon l'une quelconque des revendications 1 à 4, dans lequel la base liquide contient 75 à 95 % d'eau.

6. Procédé selon l'une quelconque des revendications 1 à 5, dans lequel la composition obtenue après agitation a une viscosité de 30 000 à 80 000 mPa.s.

7. Produit alimentaire aéré stable exempt d'émulsifiants autres que la gélatine du système de stabilisation et dans lequel la teneur en matières grasses va de 0 à 1 % en poids par rapport au poids total du produit alimentaire aéré, comprenant une mousse obtenue à partir d'une base liquide et d'un système de stabilisation à base d'hydrocolloïde consistant en un mélange de gélatine et d'agar-agar, pouvant être obtenu par le procédé selon les revendications 1 à 6.

8. Produit alimentaire aéré stable selon la revendication 7, dans lequel le taux de foisonnement de 10 % à 200 % est maintenu pendant au moins 2 mois à température ambiante.

9. Produit alimentaire aéré stable selon la revendication 7 ou 8, dans lequel la valeur calorique est entre 30 et 60 kcal/100 g.

10. Produit alimentaire composite comprenant au moins une couche de produit alimentaire aéré selon l'une quelconque des revendications 7 à 9.

11. Produit alimentaire composite selon la revendication 10, comprenant au moins une couche supplémentaire qui est choisie dans le groupe constitué de composition à base de produit laitier, une purée de fruits ou un liquide.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2011069979 A
- EP 2198722 A
- WO 2012112700 A

**Non-patent literature cited in the description**

- **H. MORITAKA et al.** *J. Texture Studies,* 1980, vol. 11, 257-270
- **M. WATASE et al.** *Rheol. Acta,* 1980, 220-225
- **A. H CLARCK et al.** *Macromolecules,* 1983, vol. 16, 1367-1374